# EUROPEAN PATENT SPECIFICATION

(11) **EP 2 581 465 B1**
(45) Date of publication and mention of the grant of the patent: **30.01.2019**
(21) Application number: 11795723.3
(22) Date of filing: 14.06.2011
(51) Int. Cl.: C21D 9/46, C23C 2/28, C21D 1/673, B21B 1/02, B21B 45/00, B23P 17/00, C21D 7/13, B32B 15/01, B21B 45/02, C21D 8/02, C21D 8/04, C21D 9/48, C21D 8/00, C22C 38/02, C22C 38/04, C22C 38/06, C22C 38/26, C23C 26/02, C23C 24/10

(54) **HOT-STAMP-MOLDED ARTICLE, PROCESS FOR PRODUCTION OF STEEL SHEET FOR HOT STAMPING, AND PROCESS FOR PRODUCTION OF HOT-STAMP-MOLDED ARTICLE**
WARMUMGEFORMTER FORMGEGENSTAND, VERFAHREN ZUR HERSTELLUNG EINES STAHLBLECHS ZUR WARMUMFORMUNG UND VERFAHREN ZUR HERSTELLUNG EINES WARMGEFORMTEN FORMGEGENSTANDS
ARTICLE MOULÉ ESTAMPÉ À CHAUD, PROCÉDÉ POUR LA PRODUCTION D'UNE TÔLE D'ACIER POUR L'ESTAMPAGE À CHAUD ET PROCÉDÉ POUR LA PRODUCTION D'UN ARTICLE MOULÉ ESTAMPÉ À CHAUD

(30) Priority: 19.04.2011 JP 2011092811; 14.06.2010 JP 2010135217
(43) Date of publication of application: 17.04.2013
(73) Proprietor: Nippon Steel & Sumitomo Metal Corporation, Tokyo 100-8071 (JP)
(72) Inventor: KAWASAKI Kaoru, Tokyo 100-8071 (JP); SANO Kohichi, Tokyo 100-8071 (JP); SEKITO Yoshihito, Tokyo 100-8071 (JP)
(74) Representative: Vossius & Partner Patentanwälte Rechtsanwälte mbB
(86) International application number: PCT/JP2011/063561
(87) International publication number: WO 2011/158818

(56) References cited:
- JP-A- 2005 205 477
- JP-A- 2006 152 427
- JP-A- 2006 212 663
- JP-A- 2010 065 294
- JP-A- 2010 121 209
- JP-A- 2010 174 278
- JP-A- 2010 174 280
- JP-A- 2010 174 281
- JP-A- 2010 174 282
- KR-A- 20080 111 549

## Description

### Field of the Invention

The present invention relates to a hot-stamped steel that is excellent in terms of balance between strength and toughness. Particularly, the present invention relates to a hot-stamped steel having a strength of 1470 MPa or more and a sufficient energy absorption capability. In addition, the present invention relates to a method of producing a steel sheet for hot stamping that is applied to parts manufactured through hot stamping, and a method of producing a hot-stamped steel in which this steel sheet for hot stamping is used.

### Description of Related Art

The weight reduction of a vehicle body is an urgent issue from the viewpoint of global environmental protection so that, in recent years, active studies have been being made regarding application of a high-strength steel sheet to a vehicle body, and the strength of the steel has also been increasing. However, since the formability of a steel sheet deteriorates as the strength of the steel sheet increases, the shape-freezing properties need to be considered. Meanwhile, in ordinarily-used pressing, the forming loads gradually increase, and thus there is a huge problem with the pressing capability of the steel sheet in terms of being put into practical use (use of a high-strength steel sheet).

From the above viewpoint, hot stamping techniques are used. In hot stamping techniques, a steel sheet is heated to a high temperature in an austenite range, and then pressed. Therefore, compared to ordinary pressing performed at room temperature, forming loads significantly decrease. In addition, since quenching is substantially performed in a die at the same time as pressing, it is possible to obtain a strength that corresponds to the amount of C included in steel, and hot stamping techniques are attracting attention as a technique that satisfies both shape-freezing properties and strength. Patent Citations 1 to 3 disclose a method in which a strength of 1000 MPa to 2000 MPa is obtained using hot stamping techniques. Patent Citation 1 discloses a steel sheet for hot stamping which has a predetermined average grain size of prior austenite grains and a predetermined amount of martensite after hot stamping, has a strength of 1770 MPa to 1940 MPa, and is excellent in terms of ductility, but does not evaluate toughness. In addition, Patent Citation 2 discloses a technique in which cleanness and the segregation degree of P and S are controlled so as to significantly improve toughness after hot stamping. However, Patent Citation 2 does not describe the average grain size of prior austenite grains. Furthermore, Patent Citation 3 discloses a technique in which toughness is improved by controlling the average grain size of prior austenite grains and using auto-tempered martensite. However, Patent Citation 3 does not disclose the shape of prior austenite (for example, a grain size ratio of prior austenite which will be described below) and the controlling method regarding microstructures formed after hot stamping, and there is a possibility that the microstructures cannot be sufficiently controlled, and the balance between strength and toughness cannot be sufficiently secured. Meanwhile, Patent Citation 4 discloses a high-strength hot-rolled steel sheet which has a predetermined aspect ratio of a prior-austenite grain size and is excellent in terms of low-temperature toughness. However, in Patent Citation 4, since the aspect ratio of prior austenite grain sizes before hot stamping is extremely high, there is a possibility that microstructures cannot be sufficiently controlled, and the balance between strength and toughness cannot be sufficiently secured after hot stamping.

### Patent Citation

[Patent Citation 1] Japanese Unexamined Patent Application, First Publication No. 2010-174282
[Patent Citation 2] Japanese Unexamined Patent Application, First Publication No. 2007-314817
[Patent Citation 3] Japanese Unexamined Patent Application, First Publication No. 2006-152427
[Patent Citation 4] Japanese Unexamined Patent Application, First Publication No. 2011-52321

JP 2005-205477 A discloses a hot-press-forming method with excellent productivity and automotive members produced with this method.

### SUMMARY OF THE INVENTION

### Problems to be Solved by the Invention

Vehicle components, particularly, parts, such as a frame, members, and reinforcement, are classified into parts that efficiently absorb energy in case of collision and parts that have a sufficient proof strength and transmit energy without deformation in case of collision according to the functions. Particularly, since there is a demand for a reinforcement having a higher strength, in cold pressing, the capability of a pressing machine is lacking, or shape-freezing properties deteriorate. Therefore, the number of parts to which hot stamping is applied (hot-stamped steel) is increasing among parts that need to have a strength of 1470 MPa or more. In addition, in order to realize additional weight reduction, there is a demand for a member having a strength of particularly 1770 MPa or more.

### Methods for Solving the Problem

Here, the present inventors manufactured a part having sufficient toughness and a tensile strength of 1470 MPa or more using hot stamping in consideration of the above circumstances, and completed the present invention.

The summery are as follows.
(1) A hot-stamped steel according to an aspect of the present invention includes, by mass%, C: 0.20% to 0.35%, Si: 0.1% to 0.5%, the total of at least one selected from Mn and Cr: 1% to 3%, Al: 0.005% to 0.06%, Ti: 0.002% to 0.1%, Nb: 0.002% to 0.1%, O: 0.003% to 0.007%, and a balance of iron and inevitable impurities, wherein P is limited to 0.015% or less, S is limited to 0.01% or less, and N is limited to 0.004% or less, the dimensional ratio of the lengths of prior austenite grains in a rolling direction to the lengths of the prior austenite in the sheet thickness direction is 1.3 to 2.5, the average grain size of the prior austenite grains is 6 µm or less, the microstructure includes 98% or more of martensite, and the tensile strength is 1470 MPa or more.
(2) The hot-stamped steel according to the above (1) may further include, by mass%, one or more of B: 0.005% or less, V: 0.1% or less, Mo: 0.5% or less, Ca: 0.03% or less, Mg: 0.03% or less, REM: 0.03% or less, Cu: 0.5% or less, Sn: 0.1% or less, Ni: 0.5% or less, and W: 1% or less.
(3) The hot-stamped steel according to the above (1) or (2) may further comprise a coating layer formed by solidification of molten metal on the surface.
(4) A method of producing a steel sheet for a hot-stamped steel according to an aspect of the present invention includes a first process in which a slab is heated to a temperature range of 1270°C or lower; a second process in which finish rolling is performed in a temperature range of 800°C to 900°C so that the total reduction from a third last stand to a last stand becomes 60% or more; a third process in which cooling begins within 1 second from the end of the second process; and a fourth process in which coiling is performed in a temperature of 600°C or lower. The slab includes: by mass%, C: 0.20% to 0.35%, Si: 0.1% to 0.5%, the total of at least one selected from Mn and Cr: 1% to 3%, Al: 0.005% to 0.06%, Ti: 0.002% to 0.1%, Nb: 0.002% to 0.1%, O: 0.003% to 0.007%, and a balance of iron and inevitable impurities, wherein P is limited to 0.015% or less, S is limited to 0.01% or less, and N is limited to 0.004% or less.
(5) In the method of producing a steel sheet for a hot-stamped steel according to the above (4), the slab may further include, by mass%, one or more of B: 0.005% or less, V: 0.1% or less, Mo: 0.5% or less, Ca: 0.03% or less, Mg: 0.03% or less, REM: 0.03% or less, Cu: 0.5% or less, Sn: 0.1% or less, Ni: 0.5% or less, and W: 1% or less.
(6) The method of producing a steel sheet for a hot-stamped steel according to the above (4) or (5) may further include, after the fourth process, a process in which cold rolling is performed.
(7) The method of producing a steel sheet for a hot-stamped steel according to the above (4) or (5) may further include, after the fourth process, a process in which cold rolling and continuous annealing is performed.
(8) The method of producing a steel sheet for a hot-stamped steel according to the above (4) or (5) may further include, after the fourth process, a process in which coating of molten metal is performed.
(9) The method of producing a steel sheet for a hot-stamped steel according to the above (4) or (5) may further include, after the fourth process, a process in which cold rolling is performed, and coating of molten metal is performed.
(10) The method of producing a steel sheet for a hot-stamped steel according to the above (4) or (5) may further include, after the fourth process, a process in which cold rolling and continuous annealing are performed, and coating of molten metal is performed.
(11) In a method of producing a hot-stamped steel according to an aspect of the present invention includes hot-stamping a steel sheet obtained using the method of producing a steel sheet for a hot-stamped steel according to the above (4) under a condition in which the steel sheet is heated to a temperature range of an Ac3 point to 900°C at a heating rate of 3 °C/s or more, and then the steel sheet is cooled at a cooling rate of 150 °C/s or more in a temperature range of 300°C to an Ar3 point.
(12) In a method of producing a hot-stamped steel according to an aspect of the present invention includes hot-stamping a steel sheet obtained using the method of producing a steel sheet for a hot-stamped steel according to the above (5) under a condition in which the steel sheet is heated to a temperature range of an Ac3 point to 900°C at a heating rate of 3 °C/s or more, and then the steel sheet is cooled at a cooling rate of 150 °C/s or more in a temperature range of 300°C to an Ar3 point..

### Effects of the Invention

According to the hot-stamped steel according to the above (1) to (3), after hot stamping, the prior austenite grain size and the shape of prior austenite are appropriately controlled while a strength of 1470 MPa or more is secured so that the balance between strength and toughness improves, energy absorption properties can be increased in case of collision, and the weight of a part can be reduced at a higher degree.

In the method of producing a steel sheet for a hot-stamped steel according to the above (4) to (10), it is possible to provide a steel sheet for a hot-stamped steel for which the prior austenite grain size and the shape of prior austenite can be appropriately controlled while a strength of 1470 MPa or more is secured after hot stamping.

In the method of producing a hot-stamped steel according to the above (11) and (12), it is possible to provide a hot-stamped steel that is excellent in terms of the balance between strength and toughness and energy absorption properties in case of collision.

### BRIEF DESCRIPTION OF THE DRAWINGS

FIG. 1 is a view showing the relationship between the amount of C and the strength of a hot-rolled steel sheet after hot stamping.
FIG. 2 is a view showing the relationship between the grain size of prior austenite and the absorbed energy of a hot-rolled steel sheet after hot stamping.
FIG 3 is a view showing the relationship between the grain size ratio of prior austenite and the absorbed energy of a hot-rolled steel sheet after hot stamping.
FIG. 4 is a view showing the relationship between the finishing temperature during hot rolling and the grain size of prior austenite after hot stamping.
FIG. 5 is a view showing the relationship between the finishing temperature during hot rolling and the grain size ratio of prior austenite after hot stamping.
FIG. 6 is a view showing the relationship between the cooling-start time after finish rolling and the grain size of prior austenite after hot stamping.
FIG. 7 is a view showing the relationship between the cooling-start time after finish rolling and the grain size ratio of prior austenite after hot stamping.
FIG. 8 is a view showing the relationship between the grain size of prior austenite after hot stamping and the absorbed energy of a cold-rolled steel sheet.
FIG. 9 is a view showing the relationship between the grain size ratio of prior austenite after hot stamping and the absorbed energy of a cold-rolled steel sheet.
FIG. 10 is a view showing a V-notch specimen used in the tests of delayed-fracture resistance in examples according to the present invention.

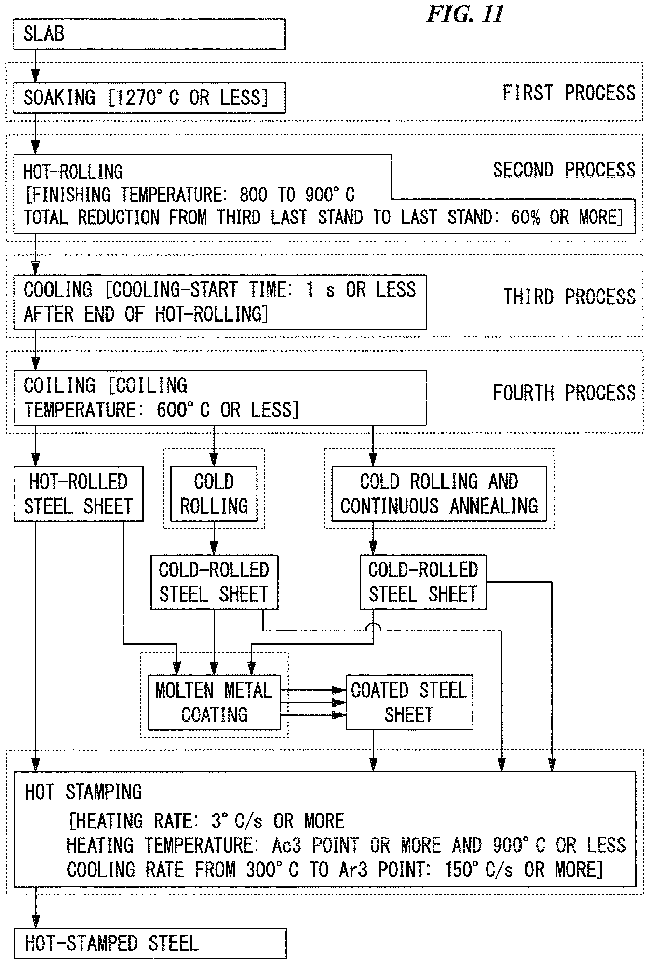

FIG. 11 is a flowchart showing a method of producing a steel sheet for hot stamping according to an embodiment of the present invention and a method of producing a hot-stamped steel according to an embodiment of the present invention.

### DETAILED DESCRIPTION OF THE INVENTION

Firstly, tests through which the present invention has been completed will be described.

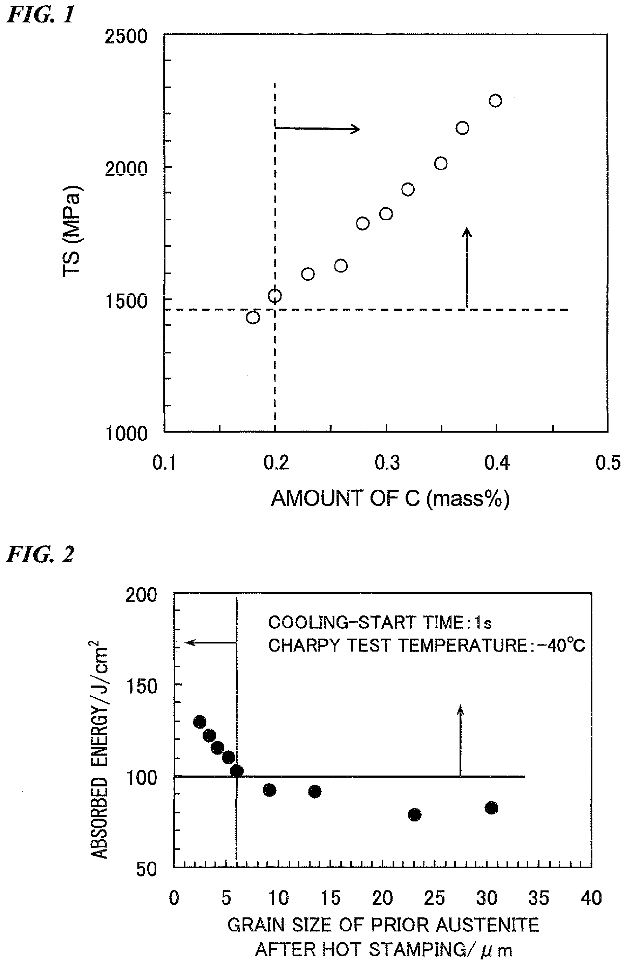

The inventors melted steels including the chemical components shown in Table 1 into a laboratory size, heated obtained ingots to 1250°C. then, performed hot rolling in which the total reduction at the final rolling and the rolling immediately before the final rolling was controlled to be 60%, the finishing temperature was controlled to be 880°C, and the sheet thickness was controlled to be 1.4 mm, began cooling at a cooling rate of 200 °C/s or less 1 second (1 s) after the end of the hot rolling, and performed coiling at 600°C. The obtained hot-rolled steel sheets were pickled, heated to 850°C at a heating rate of 10 °C/s, then, the temperature was maintained for 20 s, immediately, the steel sheets were cooled to room temperature at a cooling rate of 150 °C/s, and thereby the steel sheets having the thermal history were obtained. In this case, steel sheets including 98% or more of martensite as a microstructure were obtained. After that, No. 5 specimens described in JIS Z 2201 were prepared from the hot-rolled steel sheets having the thermal history, and tensile tests were performed according to the testing method described in JIS Z 2241. The obtained results of the tensile tests are shown in FIG. 1. That is, it was found that it is necessary to add 0.20% or more of C by mass% to steel in order to obtain a tensile strength of 1470 MPa or more after hot stamping which is an object of the present invention.

Furthermore, hot-rolling was performed under a variety of conditions using the steel including the No.2 chemical components in Table 1 so as to manufacture 3.2 mm-thick hot-rolled steel sheets and 1.6 mm-thick hot-rolled steel sheets. Here, cold rolling was subsequently performed on the 3.2 mm-thick hot-rolled steel sheets so as to manufacture 0.8 mm-thick cold-rolled steel sheets.

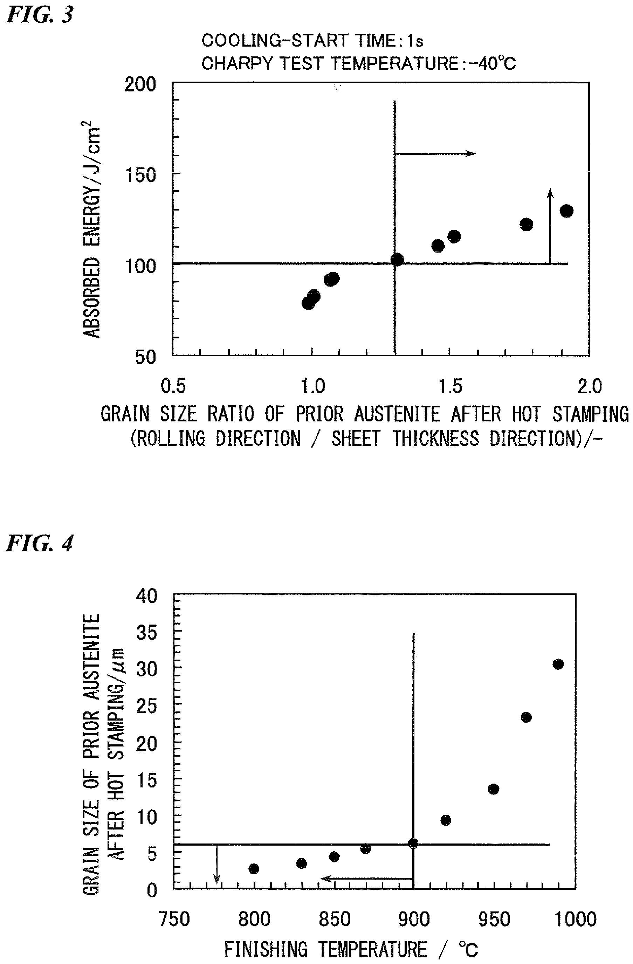

Firstly, the tensile strength and toughness of the 1.6 mm-thick hot-rolled steel sheets were investigated when hot stamping was performed on the steel sheets under heat treatment conditions (thermal history) in which the steel sheets were heated to 900°C at a heating rate of 10 °C/s and cooled to room temperature at a cooling rate of 200 °C/s. Steel sheets including 98% or more of martensite were obtained as a microstructure in all of the hot rolling conditions. In addition, the martensite was not tempered martensite. As a result of tensile tests according to the same testing methods as above, a tensile strength of 1470 MPa or more was obtained in all of the hot rolling conditions. For the toughness, V-notch specimens (width: 10 mm) were prepared, Charpy impact tests were performed, and the absorbed energies (in terms of a sheet thickness of 10 mm) were evaluated at -40°C. Furthermore, the prior austenite grain size (average value) after hot stamping (thermal history) and the prior austenite grain size ratio (the dimensional ratio of the length of prior austenite in a rolling direction to the length of prior austenite in the sheet thickness direction) were evaluated by a method described later, and the relationship between the above and the absorbed energy was investigated. The obtained results are shown in FIGS. 2 and 3. That is, it was found that, from the viewpoint of securing toughness after hot stamping, it is important to control the prior austenite grain size in the steel sheet after hot stamping to be 6 µm or less and control the prior austenite grain size ratio (the length in the rolling direction/ the length in the sheet thickness direction) to be 1.3 or more.

Furthermore, the inventors found that the prior austenite grain size was 6 µm or less, and the prior austenite grain size ratio (the length in the rolling direction/ the length in the sheet thickness direction) was 1.3 or more even in hot-stamped steel sheets (steels) in a case in which the prior austenite grain size was 6 µm or less, and the prior austenite grain size ratio (the length in the rolling direction/ the length in the sheet thickness direction) is 1.3 or more in hot-rolled steel sheets.

The mechanism is considered to be as follows. For example, in a case in which the prior austenite grain size is as small as 6 µm or less, and the prior austenite grain size ratio (the length in the rolling direction/ the length in the sheet thickness direction) is 1.3 or more, as high a proportion as almost 100% of the microstructure transforms from austenite to ferrite and cementite in the cooling and coiling process after hot rolling,, and, furthermore, as high a proportion as almost 100% of the microstructure transforms ferrite and cementite to austenite during heating before hot stamping. Therefore, it is considered that, in this case, prior austenite grains for which the grain size is 6 µm or less, and the prior austenite grain size ratio (the length in the rolling direction/ the length in the sheet thickness direction) is 1.3 or more can be secured even after hot stamping even when the transformation from austenite to ferrite and cementite and transformation of ferrite and cementite to austenite are repeated.

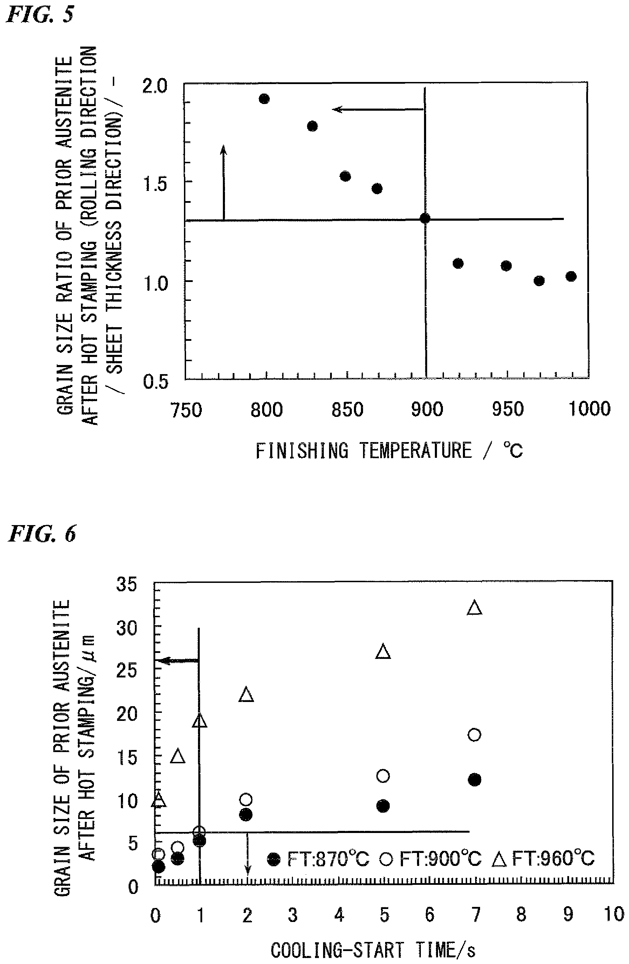

Therefore, in order to secure the above prior austenite grain size and the above prior austenite grain size ratio after hot stamping, the finishing temperature in hot rolling and the cooling-start time after finishing rolling are important as shown in FIGS. 4 to 7. That is, it is necessary to end hot rolling (finish rolling) at 900°C or lower and begin cooling within 1 second after the end of the finish rolling (the cooling-start time is 1 s or less). While the cooling rate from the beginning of the cooling after the hot rolling to coiling was controlled to be 200 °C/s or less in the above tests, the prior austenite grain size after hot stamping can be controlled to be 6 µm or less, and the prior austenite grain size ratio (the length in the rolling direction/ the length in the sheet thickness direction) can be controlled to be 1.3 or more even when the cooling rate exceeds 200 °C/s.

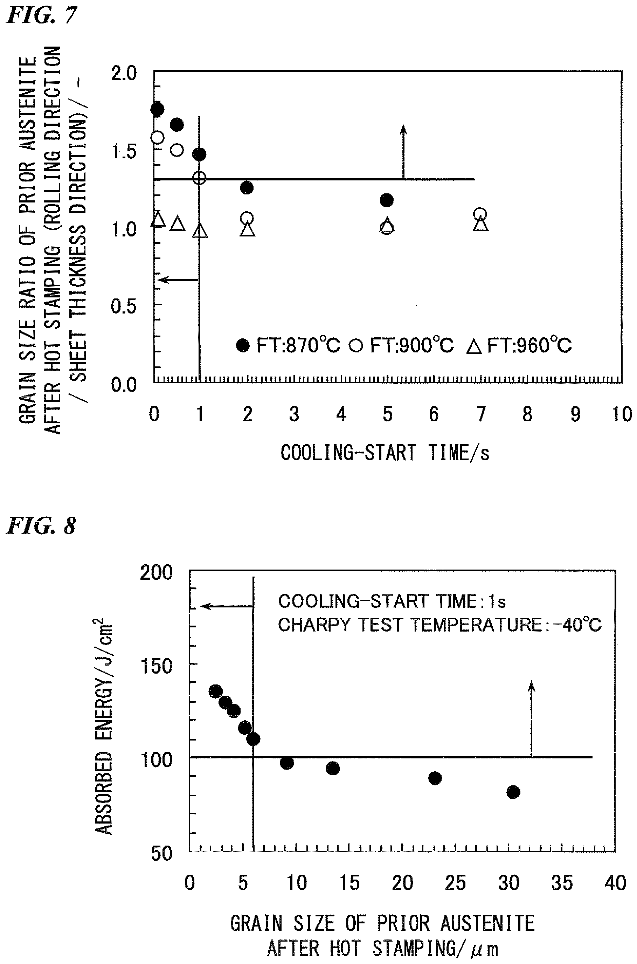

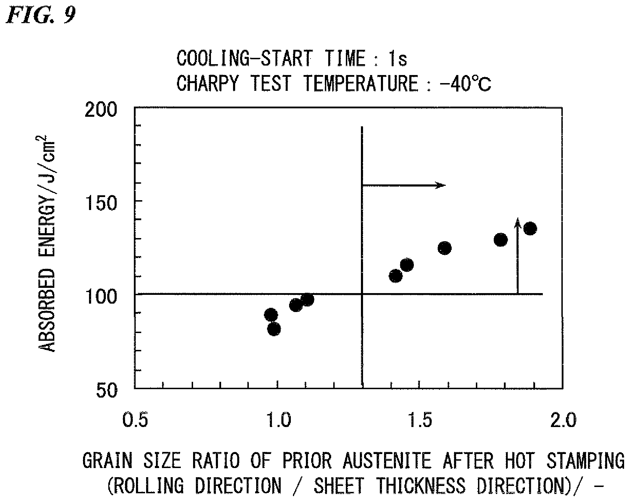

Meanwhile, for the above 0.8 mm-thick cold-rolled steel sheets, the tensile strength and toughness were investigated in the same manner as for the hot-rolled steel sheets after the steel sheets were heated to 850°C at a heating rate of 10 °C/s, and then cooled to room temperature at a cooling rate of 150 °C/s. For the cold-rolled steel sheets as well, a tensile strength of 1470 MPa or more could be obtained in all of the hot rolling conditions. FIGS. 8 and 9 show the results of Charpy impact tests performed in the same manner as above. It is considered that the characteristics of the cold-rolled steel sheets also have a correlation with the conditions of hot rolling, and it was found that the characteristics of the cold-rolled steel sheets showed a favorable correlation with the prior austenite grain size and the prior austenite grain size ratio (the length in the rolling direction/ the length in the sheet thickness direction) after hot stamping. Meanwhile, here, for the measurement of the prior austenite grain size and the prior austenite grain size ratio, etching was performed using an aqueous solution including sodium dodecylbenzene sulfonate, picric acid, oxalic acid and chloric acid, and a 1/8 t portion (or 7/8 t portion) of the sheet thickness was observed using an optical microscope.

**[Table 1]**

| No. | Chemical components (mass%) | | | | | | | | | | | | Ac3 (°C) |
|---|---|---|---|---|---|---|---|---|---|---|---|---|---|
| | C | Si | Mn | Cr | P | S | Al | Ti | Nb | REM | N | O | |
| 1 | 0.18 | 0.14 | 1.24 | 0.22 | 0.012 | 0.0018 | 0.035 | 0.031 | 0.034 | 0.011 | 0.0028 | 0.0034 | 828 |
| 2 | 0.20 | 0.15 | 1.35 | 0.18 | 0.014 | 0.0025 | 0.027 | 0.081 | 0.058 | 0.017 | 0.0034 | 0.0047 | 838 |
| 3 | 0.23 | 0.13 | 1.27 | 0.25 | 0.015 | 0.0027 | 0.034 | 0.061 | 0.072 | 0.009 | 0.0029 | 0.0039 | 829 |
| 4 | 0.26 | 0.14 | 1.08 | 0.37 | 0.015 | 0.0021 | 0.032 | 0.025 | 0.052 | 0.006 | 0.0032 | 0.0031 | 814 |
| 5 | 0.28 | 0.15 | 1.35 | 0.19 | 0.012 | 0.0018 | 0.026 | 0.031 | 0.051 | 0.007 | 0.0022 | 0.0042 | 800 |
| 6 | 0.30 | 0.15 | 1.23 | 0.22 | 0.016 | 0.0019 | 0.033 | 0.028 | 0.032 | 0.005 | 0.0033 | 0.0033 | 804 |
| 7 | 0.32 | 0.13 | 1.32 | 0.31 | 0.014 | 0.0023 | 0.028 | 0.031 | 0.025 | 0.018 | 0.0029 | 0.0045 | 795 |
| 8 | 0.35 | 0.16 | 1.05 | 0.72 | 0.015 | 0.0015 | 0.025 | 0.033 | 0.048 | 0.027 | 0.0033 | 0.0051 | 799 |
| 9 | 0.37 | 0.15 | 1.22 | 0.24 | 0.015 | 0.0018 | 0.031 | 0.024 | 0.018 | 0.008 | 0.0029 | 0.0064 | 789 |
| 10 | 0.40 | 0.14 | 1.19 | 0.36 | 0.014 | 0.0021 | 0.033 | 0.029 | 0.055 | 0.012 | 0.0031 | 0.0039 | 787 |

The present invention has been completed based on the above testing circumstances.

Hereinafter, a hot-stamped steel according to an embodiment of the present invention will be described. Firstly, the chemical composition of the hot-stamped steels of the embodiment and steel sheets that will be used for the hot-stamped steels will be described. Meanwhile, here, "%" indicates "mass%."

C is an element that plays an important role in the embodiment, and particularly has a large influence on strength after quenching. Therefore, in order to obtain a tensile strength of 1470 MPa or more, the amount of C needs to be 0.20% or more. On the other hand, when the amount of C exceeds 0.35%, fracture becomes liable to occur during impact deformation, weldability deteriorates, and the strength of a weld degrades. Therefore, the upper limit of the amount of C is 0.35%. In a case in which a tensile strength needs to be secured more reliably, the amount of C is preferably 0.21% or more. In addition, in a case in which weldability is further enhanced, the amount of C is preferably 0.32% or less, and is more preferably 0.30% or less.

Since Si is a solid solution strengthening element and an element that suppresses precipitation of cementite, the amount of Si needs to be 0.1% or more. On the other hand, when Si is excessively added to steel, coatability on the surface of a steel sheet deteriorate in a case in which metal coating is performed as described below. Therefore, the upper limit of the amount of Si is 0.5%.

Mn and Cr are important elements for securing hardenability, and the total of at least one selected from Mn and Cr needs to be 1% or more in a case in which hot stamping is performed. On the other hand, when the total of at least one selected from Mn and Cr exceeds 3%, hardenability is enhanced, and the strength of the hot-rolled steel sheet becomes excessively large. Therefore, in this case, since the load becomes excessively large in a case in which cold forming, such as cold rolling, is performed, the upper limit of the total of at least one selected from Mn and Cr needs to be 3%, and is preferably 2.7%.

Here, for example, in a case in which Mn is included in steel, in order to further secure hardenability, the amount of Mn is preferably 1.0% or more, is more preferably 1.1% or more, and is most preferably 1.2% or more. In addition, in order to sufficiently secure cold formability, the amount of Mn is preferably 3.0% or less, is more preferably 2. 8% or less, and is most preferably 2.7% or less.

In addition, for example, in a case in which Cr is included in steel, the amount of Cr may be 0.005% or more, and is preferably 0.15% or more in order to further secure hardenability. In addition, in order to more sufficiently secure cold formability, the amount of Cr is preferably 1.0% or less.

Ti and Nb are also important elements in the embodiment. In order to control the dimensional ratio of the lengths of prior austenite grains in a rolling direction to the lengths of prior austenite in the sheet thickness direction after hot stamping to be 1.3 or more and control the average grain size of the prior austenite grains to be 6 µm or less, the amount of Ti and the amount of Nb each need to be 0.002% or more, are preferably 0.005% or more, are more preferably 0.010% or more, and are most preferably 0.015% or more. On the other hand, since the effects reach an upper limit even when the amount of Ti or the amount of Nb exceeds 0.1 %, the upper limits of the amount of Ti and the amount of Nb each are 0.1%.

O is an element necessary to form oxides. When the amount of O is less than 0.003%, the number of fine oxides is small, and therefore a prior austenite grain size of 6 µm or less is not obtained. Therefore, the lower limit of the amount of O needs to be 0.003%. On the other hand, when the amount of O exceeds 0.007%, the amount of oxides being formed becomes too large, and therefore formability and toughness deteriorate. Therefore, the upper limit of the amount of O is 0.007%, is preferably 0.006%, and is more preferably 0.005%.

P is a solid solution strengthening element, and can enhance the strength of a steel sheet at relatively low cost. However, P is liable to segregate at grain boundaries, and there is a problem of low-temperature embrittlement in the case of a high strength, and therefore the upper limit of the amount of P is 0.015%, and is preferably 0.010%. On the other hand, the amount of P may be 0%; however, when the amount of P is lower than 0.001%, the costs for removing P increase extremely. Therefore, regarding P included as an inevitable impurity, the lower limit of the amount of P is preferably 0.001%, and more preferably 0.005%.

Since S is an inevitable impurity, has an influence on the hot embrittlement of steel, and deteriorates formability, particularly, hot formability, the amount of S is preferably lower. Therefore, the upper limit of the amount of S is 0.01%, and is preferably 0.009%. However, while the amount of S may be 0%, in a case in which the amount of S is reduced to less than 0.001%, the desulfurization costs increase extremely, and therefore the lower limit of the amount of S is preferably 0.001%, and is more preferably 0.002%.

Al is added for deoxidization and inevitably included in steel. When the amount of Al is less than 0.005%, deoxidization is not sufficient, and a large amount of oxides remain in steel. Therefore, local deformability deteriorates, and physical properties significantly vary. Therefore, the lower limit of the amount of Al is 0.005% or more, and is preferably 0.20% or more. On the other hand, when the amount of Al exceeds 0.06%, a large amount of oxides mainly including alumina remains in steel, and local deformability deteriorates. Therefore, the upper limit of the amount of Al is 0.06%, and is preferably 0.05%.

N is also inevitably included in steel. The amount of N may be 0%; however, when the amount of N is extremely reduced, the costs increase, and therefore the lower limit of the amount of N is preferably 0.001%, and is more preferably 0.0015%. On the other hand, when the amount of N exceeds 0.004%, inclusions are formed, and toughness after quenching deteriorates. Therefore, the upper limit of the amount of N is 0.004%, and is preferably 0.0035%.

Meanwhile, a chemical composition consisting of the above basic chemical components (basic elements) and a balance of Fe and inevitable impurities is the basic composition of the embodiment. However, in addition to the basic composition, at least one selected from the following chemical components (optional elements) can be included in steel (instead of some of Fe in the balance). In addition, even in a case in which the optional elements are not included in steel, the effects of the embodiment are not impaired, and therefore, the lower limit of the optional elements may be 0%. Meanwhile, the effects of the embodiment are not impaired even when the optional elements are inevitably mixed into steel.

B is an effective element for securing hardenability; however, when the amount of B is less than 0.0005%, the effect is not easily exhibited. Therefore, in a case in which more favorable hardenability is secured, the amount of B is preferably 0.0005% or more. On the other hand, when the amount of B exceeds 0.005%, the effect reaches an upper limit, and therefore the upper limit of the amount of B is 0.005%, and is preferably 0.002%.

Ca and Mg are deoxidizing elements, and are effective elements for refining of the grain size of prior austenite since Ca and Mg form fine oxides. Therefore, in a case in which prior austenite is refined using Ca or Mg, the amount of Ca or the amount of Mg is preferably 0.005% or more. However, when the amount of Ca or the amount of Mg exceeds 0.03%, the effect reaches an upper limit, and therefore the upper limits of the amount of Ca and the amount of Mg are 0.03%, are preferably 0.02%, and are more preferably 0.015%.

Rare earth metals (REM) including Ce and the like are deoxidizing elements, and are effective elements for refining of the grain size of prior austenite since REM form fine oxides. Therefore, in a case in which prior austenite is refined using REM, the amount of REM is preferably 0.005% or more. However, when the amount of REM exceeds 0.03%, the effect reaches an upper limit, and therefore the upper limit of the amount of REM is 0.03%, is preferably 0.028%, and is more preferably 0.025%.

V is an element that is added to steel for refining of a microstructure from the viewpoint of toughness securement. That is, in a case in which a steel sheet is heated to Ac3 point or higher, V forms fine carbides so as to supperss recrystallization and grain growth and thus refines austenite grains, and therefore an effect of improving toughness is obtained. When the amount of V is less than 0.005%, the effect cannot be obtained, and therefore, in a case in which more favorable toughness is secured, the amount of V is preferably 0.005% or more, is more preferably 0.010% or more, and is most preferably 0.030% or more. On the other hand, when the amount of V exceeds 0.1%, the effect reaches an upper limit, and the costs increases, and therefore the upper limit of the amount of V is 0.1%, is preferably 0.09%, and is more preferably 0.08%.

Similarly to Ti, Nb, and V, in a case in which a steel sheet is heated to Ac3 point or higher, Mo also forms fine carbides so as to suppress recrystallization and grain growth and thus refines austenite grains, and therefore an effect of improving toughness is obtained. Therefore, in a case in which more favorable toughness is secured, the lower limit of the amount of Mo is preferably 0.05%, is more preferably 0.08%, and is most preferably 0.10%. On the other hand, when the amount of Mo exceeds 0.5%, the effect reaches an upper limit, and the costs increases, and therefore the upper limit of the amount of Mo is 0.5%, and is preferably 0.45%.

W is added to steel in a case in which martensite is formed more stably in a hot stamping process. When the amount of W is less than 0.1%, the effect is not sufficient, and therefore the lower limit of the amount of W is preferably 0.1% in a case in which the effect is sufficiently obtained. When the amount of W exceeds 1%, the effect reaches an upper limit, and therefore the upper limit of the amount of W is 1 %.

Meanwhile, for example, in a case in which scraps are used in a steel-making process, there is a case in which elements, such as Cu, Sn, and Ni, are included in steel. Even in this case, the effects according to the embodiment are not directly influenced. However, when the elements are included excessively in steel, cracking occurs during hot rolling. Therefore, the upper limit of the amount of Cu is 0.5%, is preferably 0.3%, and is more preferably 0.2%. Similarly, the upper limit of the amount of Sn is 0.1%, is preferably 0.05%, and is more preferably 0.02%. In addition, the upper limit of the amount of Ni is 0.5%, is preferably 0.3%, and is more preferably 0.1%. Meanwhile, the lower limits of the elements are not particularly limited, the lower limits of the amount of Cu, the amount of Sn, and the amount of Ni are preferably 0.01%, 0.005%, and 0.01% respectively in consideration of refining costs in a case in which the elements are inevitably mixed into steel.

As described above, the hot-stamped steel of the embodiment and the steel sheet used for the hot-stamped steel have a chemical composition consisting of the above basic elements and the balance of Fe and inevitable impurities or a chemical composition consisting of the basic elements, one or more of the above optional elements, and the balance of Fe and inevitable impurities.

Furthermore, as described above, the hot-stamped steel according to the embodiment includes 98% or more of martensite in terms of area percentage. Some or all of the martensite may be tempered martensite. Meanwhile, the microstructure of the balance of the martensite is not particularly limited, and may be at least one selected from bainite and residual austenite. Meanwhile, the upper limit of the amount of the martensite may be 100%.

Additionally, in the embodiment, the dimensional ratio (prior austenite grain size ratio) of the lengths of prior austenite grains in the rolling direction to the lengths of prior austenite grains in the sheet thickness direction is 1.3 or more, and the average grain size of prior austenite grains is 6 µm or less in terms of equivalent circle diameter. The lower limit of the average grain size of prior austenite grains is not particularly limited, and may be 3.0 µm in consideration of measurement resolution. Here, when the prior austenite grain size ratio of hot-stamped prior austenite grains exceeds 2.5, the anisotropy of the steel sheet becomes excessively large, and thus there is a concern of deterioration of toughness. Therefore, the prior austenite grain size ratio needs to be 2.5 or less. In a case in which it is necessary to further suppress the anisotropy of the steel sheet, the prior austenite grain size ratio is preferably 2.0 or less.

Meanwhile, the amount of the martensite, the prior austenite gain size, and the prior austenite grain size ratio are measured by observing the microstructure of a cross section of a specimen using an optical microscope.

In addition, the hot-stamped steel of the embodiment and the steel sheet used for the hot-stamped steel has a tensile strength of 1470 MPa or more as described above. In addition, the upper limit of the tensile strength is not particularly limited; however, for example, the tensile strength is preferably 2450 MPa or less. Meanwhile, the dimension (size) is not particularly limited, and can be appropriately selected according to use.

Hereinafter, a method of producing the steel sheet for hot stamping according to an embodiment of the present invention will be described.

In the embodiment, steel having a chemical composition that consists of the above basic elements, furthermore, the above optional elements according to necessity, and the balance of Fe and inevitable impurities are used. The steel is continuously cast so as to manufacture a slab, and the slab is heated to a temperature range of 1250°C or lower (first process). The heated slab is hot-rolled, during which finish rolling is performed in a temperature range of 800°C to 900°C (finishing temperature) so that the total reduction of 3 passes from rolling at the third last stand to rolling at the last stand becomes 60% or more (second process). Cooling begins within 1 second from the end of hot rolling (finish rolling) for a steel sheet obtained through the hot rolling (third process). Furthermore, coiling is performed on the steel sheet in a temperature of 600°C or lower so as to manufacture a hot-rolled steel sheet (fourth process).

Here, the continuous casting method is not particularly limited, and may be an ordinary continuous casting method or a thin slab casting method in which the thickness of a slab is 100 mm or less. The effects of the embodiment do not change due to the type of the continuous casting method.

In the embodiment, hot rolling conditions are extremely important particularly for toughness after hot stamping. That is, in order to control the dimensional ratio of the lengths of the prior austenite grains in the rolling direction to the lengths of prior austenite grains in the sheet thickness direction (grain size ratio of prior austenite) after hot stamping to be 1.3 or more and control the average grain size to be 6 µm or less, the heating temperature during hot rolling is preferably lower. For this, the heating temperature is controlled to be 1270°C or lower, and preferably to be 1250°C or lower. Meanwhile, when the heating temperature is too low, deformation resistance becomes extremely large during hot rolling, and therefore rolling properties degrade. Therefore, the lower limit of the heating temperature is preferably 1050°C. In addition, the finishing temperature is also preferably as low as possible, but a finishing temperature of 800°C or higher and preferably 850°C or higher is secured in consideration of rolling properties. On the other hand, when the finishing temperature exceeds 900°C, the prior austenite grain size ratio becomes smaller than 1.3, and toughness deteriorates, and therefore the upper limit of the finishing temperature is 900°C. At this time, the total reduction from the third last stand to the last stand (the total amount of the reduction at the third last stand, the reduction at the second last stand, and the reduction at the last stand) is controlled to be 60% or more, and preferably to be 70% or more. Meanwhile, the upper limit of the total reduction from the third last stand to the last stand is not particularly limited, and may be 95% in consideration of the sheet thickness of a hot-rolled steel sheet. Furthermore, cooling rapidly begins after the end of the finish rolling, and, specifically, cooling beings within 1 second from the end of the finish rolling, and preferably within 0.5 seconds from the end of the finish rolling. Meanwhile, the cooling rate from the beginning of the cooling after the hot rolling to coiling may be 200 °C/s or less or more than 200 °C/s. After that, coiling is performed in a temperature range of 600°C or lower so that the prior austenite grain size ratio can be controlled to be 1.3 or more, and the average grain size of the prior austenite grains can be controlled to be 6 µm or less after hot stamping. When the coiling temperature exceeds 600°C, the total reduction (3 passes) is less than 60%, or the cooling-start time after the finish rolling exceeds 1 second, it is not possible to control the prior austenite grain size ratio to be 1.3 or more, and control the average grain size of the prior austenite grains to be 6 µm or less after hot stamping. Meanwhile, when the coiling is performed in a temperature of lower than 400°C, the strength of the hot-rolled steel sheet becomes too large, and therefore the lower limit of the coiling temperature is preferably 400°C. Particularly, in order to obtain a microstructure including ferrite and pearlite, the coiling temperature is preferably 500°C or higher. On the other hand, in a case in which the coiling is performed in a temperature of lower than 400°C, a reheating treatment intended for softening may be performed after the coiling. Meanwhile, the cooling-end temperature of cooling that begins within 1 second from the end of the finish rolling is not particularly limited as long as austenite is sufficiently transformed to ferrite and cementite, and, for example, in a case in which cooling is controlled in a single step, the cooling-end temperature is 400°C or higher. In addition, the lower limit of the cooling-start time after the finish rolling is not particularly limited, and may be 0.01 seconds in consideration of the capability of a cooling facility.

Furthermore, processes, such as cold rolling, continuous annealing, and a variety of coating or plating, can be performed on the obtained hot-rolled steel sheet according to necessity. For example, cold rolling can be performed on the hot-rolled steel sheet so as to manufacture a cold-rolled steel sheet. Continuous annealing may also be performed on the cold-rolled steel sheet according to necessity. In addition, a variety of coating or plating (for example, coating of molten metal) can be performed on the hot-rolled steel sheet and the cold-roiled steel sheet (including the cold-rolled steel sheet that has undergone continuous annealing) so as to manufacture coated steel sheets.

Here, cold rolling conditions, continuous annealing conditions, and coating conditions are not particularly limited, and cold rolling, continuous annealing, and coating may be performed in an ordinary range. That is, the cold rolling is performed in a reduction range of ordinarily performed cold rolling, and, specifically, the cold rolling can be performed at a reduction of 40% to 80%. The coating is performed immediately after the hot rolling, immediately after the cold rolling, or after recrystallization annealing, but heating conditions or cooling conditions are not particularly limited. Furthermore, Zn or Al is ordinarily used as a coating metal, but whether or not the Zn coating is alloyed is not limited. In addition, for Al coating, the coating may include Si, and the effects of the embodiment are not influenced.

Skin pass may be performed on the hot-rolled steel sheet, the cold-rolled steel sheet, and the coated steel sheet. The skin pass is not particularly limited, and the skin pass can be performed at an appropriate timing according to necessity in order to appropriately adjust the shape.

Hereinafter, a method of producing the hot-stamped steel according to the embodiment of the present invention will be described.

In the embodiment, hot stamping is performed on the hot-rolled steel sheet, the cold-rolled steel sheet, and the coated steel sheet which are manufactured under the conditions of the embodiment under conditions in which the steel sheets are heated to a temperature range of Ac3 point to 900°C at a heating rate of 3 °C/s or more, and then are cooled at a cooling rate of 150 °C/s or more in the temperature range of 300°C to an Ar3 point so as to produce hot-stamped steels.

Regarding the heat treatment conditions when hot stamping is performed on the hot-rolled steel sheet, the cold-rolled steel sheet, and the coated steel sheet, in a case in which the heating rate is less than 3 °C/s or the steel sheets are heated to higher than 900°C, the prior austenite grain size of 6 µm or less cannot be obtained, and the dimensional ratio of the lengths of the prior austenite grains in the rolling direction to the lengths of prior austenite grains in the sheet thickness direction becomes less than 1.3 after hot stamping. In addition, since the thermal holding time is preferably shorter from the viewpoint of suppressing grain growth, the thermal holding time is set to 180 seconds or less. In addition, when the cooling rate is less than 150 °C/s during cooling in the temperature range of 300°C to the Ar3 point, the strength in a part is liable to change, and there is a concern that toughness may deteriorate due to precipitation of coarse carbides. Therefore, the cooling rate in the temperature range of 300°C to the Ar3 point is controlled to be 150 °C/s or more. Meanwhile, the upper limit of the cooling rate in the temperature range is not particularly limited, and may be 500 °C/s in consideration of the fact that the effect of transformation control reaches the upper limit. On the other hand, when the heating temperature becomes lower than Ac3 point, some areas are not transformed to austenite, and therefore martensite is not formed in the areas, and a sufficient strength cannot be obtained. Furthermore, the effects of the embodiment are not influenced even when cementite is precipitated due to auto tempering during cooling or after cooling in hot stamping. Meanwhile, in order to more reliably control the morphology of the prior austenite grains, the heating rate is preferably 5 °C/s or more. The upper limit of the heating rate is not particularly limited, and may be 100 °C/s in consideration of the capability of a heating facility. In addition, in a case in which the Ac3 point exceeds 870°C, the heating temperature is preferably 870°C or lower.

### [Examples]

### [Example 1]

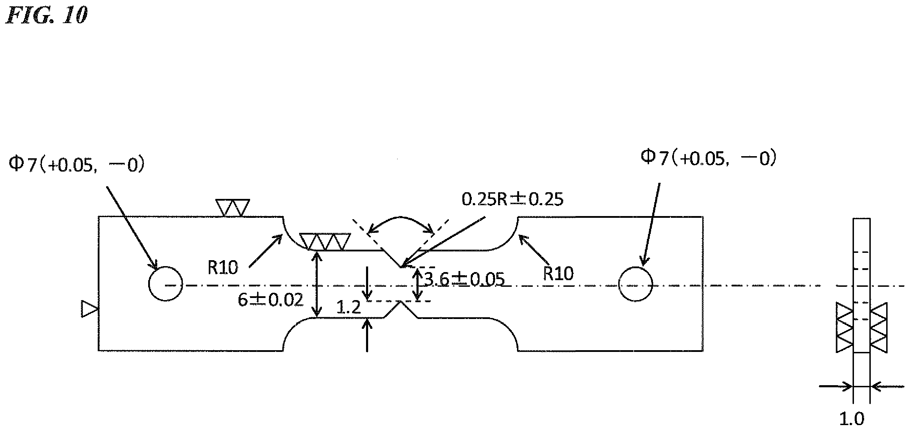

Steels having the chemical components shown in Table 2 (Steels A to Y) were supplied from a converter, cast into slabs, and hot-rolled under predetermined hot rolling conditions (heating temperature: 1220°C, finishing temperature: 870°C, total reduction applied from the third last stand to the last stand: 65%, time from the end of finish rolling to the beginning of cooling: 0.5 seconds, coiling temperature: 600°C), thereby manufacturing 3 mm-thick hot-rolled steel sheets. For Steels A to L and Steels U to Y, the prior austenite grain sizes in the hot-rolled steel sheet were 6 µm or less, and the dimensional ratios of the length of prior austenite in a rolling direction to the length of prior austenite in the sheet thickness direction were 1.3 or more. After the hot-rolled steel sheets were cold-rolled so as to obtain 1.4 mm-thick cold-rolled steel sheets, continuous annealing was performed under the conditions shown in Table 3, and a coating was performed after the annealing according to necessity. The coating at this time is galvanizing (GI (with no alloying)), galvannealing (GA (with an alloying)) or alumizing (Al) including Al and 10% of Si. The steel sheets were heated to 900°C in a heating furnace in a laboratory at a heating rate of 15 °C/s, temperature was maintained for 60 seconds, then, the steel sheets were inserted between dies having a water supply inlet through which water was supplied from the surface and a water drain outlet through which the water was discharged, and was cooled to room temperature through spraying of water (cooling at 150 °C/s to 500 °C/s), thereby simulating the thermal history during hot stamping. Meanwhile, as a result of observing the microstructure of a cross section using an optical microscope, the steel sheet subjected to the thermal history included 98% or more of martensite in terms of area percentage. Furthermore, in order to evaluate the strength after the heat treatment, No. 5 specimens described in JIS Z 2201 were prepared from the steel sheets subjected to the thermal history, and tensile tests were performed according to the testing method described in JIS Z 2241. The obtained results are shown in Table 2 in the same manner. In addition, delayed-fracture resistance and low-temperature toughness were also evaluated. For delayed-fracture resistance, specimens having a V notch as shown in FIG. 10 were used, the specimens were immersed in an aqueous solution of 3 g/l of ammonium thiocyanate dissolved in a 3% saline solution at room temperature for 24 hours, and the presence of fracture was determined (no fracture: A, fracture present: B). Meanwhile, for low-temperature toughness, Charpy tests were performed at -40°C, and steel sheets (after being subjected to the thermal history) for which an absorbed energy of 100 J/cm² to 150 J/cm² and a percentage ductile fracture of 50% or more were obtained in a case in which evaluation was made on a converted thickness of 10 mm were determined to be 'pass (A)'. Steels according to the present invention (Steels A to K and Steels U to Y) had a tensile strength TS of 1470 MPa or more, and had sufficient delayed-fracture resistance and low-temperature toughness. Meanwhile, for Steel L in which the amount of C was less than 0.20%, the tensile strength TS failed to reach 1470 MPa. In addition, for Steel M in which the amount of C exceeded 0.35%, the tensile strength TS was 2230 MPa, delayed-fracture resistance and low-temperature toughness degraded. Furthermore, for Steels N, O, R, S, and T to which Ti or Nb was not added, since the dimensional ratio of the lengths of the prior austenite grains in the rolling direction to the lengths of the prior austenite in the sheet thickness direction did not reach 1.3, and the average grain size was larger than 6 µm after hot stamping of the thermal history, toughness was low. Meanwhile, for Steel P in which the amount of Si exceeded 0.5%, delayed-fracture resistance was not sufficient, and the coatability was poor. Furthermore, for Steel Q in which the amount of O was less than 0.003%, since the prior austenite grains having an average grain size of 6 µm or less were not obtained, the delayed-fracture resistance was poor.

**[Table 2]**

| Steel | Chemical components (mass%) | | | | | | | | | | | | | | | | Ac3 (°C) | Ar3 (°C) |
|---|---|---|---|---|---|---|---|---|---|---|---|---|---|---|---|---|---|---|
| | C | Si | Mn | Cr | P | S | t-Al | Ti | Nb | V | Mo | B | REM | O | N | Otheres | | |
| A | 0.21 | 0.14 | 1.27 | 0.25 | 0.006 | 0.0028 | 0.029 | 0.031 | 0.038 | - | - | - | - | 0.0037 | 0.0021 | - | 813 | 712 |
| B | 0.25 | 0.28 | 1.34 | 0.18 | 0.008 | 0.0034 | 0.038 | 0.019 | 0.057 | - | 0.15 | 0.0011 | 0.009 | 0.0041 | 0.0022 | Cu:0.09,Ni:0.04,Sn:0.013 | 809 | 588 |
| C | 0.28 | 0.12 | 1.37 | 0.21 | 0.008 | 0.0051 | 0.034 | 0.008 | 0.042 | - | - | - | 0.009 | 0.0032 | 0.0015 | - | 789 | 682 |
| D | 0.28 | 0.15 | 1.77 | 0.23 | 0.005 | 0.0032 | 0.028 | 0.014 | 0.071 | - | - | - | 0.018 | 0.0048 | 0.0029 | - | 776 | 626 |
| E | 0.28 | 0.18 | 2.67 | 0.24 | 0.007 | 0.0027 | 0.031 | 0.072 | 0.054 | - | - | - | 0.016 | 0.0038 | 0.0018 | Cu:0.11,Ni:0.05,Sn:0.013 | 777 | 557 |
| F | 0.28 | 0.15 | 1.23 | 0.79 | 0.011 | 0.0037 | 0.041 | 0.015 | 0.085 | 0.07 | - | - | - | 0.0045 | 0.0023 | Cu:0.08,Ni:0.05,Sn:0.011 | 802 | 603 |
| G | 0.29 | 0.12 | 1.58 | 0.18 | 0.013 | 0.0033 | 0.028 | 0.037 | 0.052 | - | 0.11 | - | - | 0.0035 | 0.0018 | Ca:0.008 | 794 | 648 |
| H | 0.29 | 0.17 | 1.32 | 0.32 | 0.014 | 0.0024 | 0.022 | 0.045 | 0.076 | - | - | 0.0007 | 0.025 | 0.0038 | 0.0022 | Mg:0.011 | 805 | 568 |
| I | 0.30 | 0.15 | 1.28 | 0.87 | 0.007 | 0.0093 | 0.028 | 0.015 | 0.015 | 0.05 | 0.21 | 0.0015 | 0.024 | 0.0057 | 0.0024 | - | 789 | 556 |
| J | 0.32 | 0.23 | 1.31 | 0.56 | 0.011 | 0.0035 | 0.038 | 0.024 | 0.037 | - | - | - | 0.008 | 0.0035 | 0.0018 | Cu:0.10,Ni:0.04,Sn:0.012 | 799 | 659 |
| K | 0.35 | 0.49 | 1.22 | 0.19 | 0.009 | 0.0021 | 0.047 | 0.011 | 0.007 | - | 0.42 | 0.0011 | 0.011 | 0.0061 | 0.0018 | W:0.52 | 805 | 598 |
| L | 0.19 | 0.35 | 1.56 | 0.22 | 0.007 | 0.0023 | 0.029 | 0.022 | 0.015 | - | - | - | 0.009 | 0.0035 | 0.0022 | - | 816 | 721 |
| M | 0.36 | 0.21 | 2.11 | 0.24 | 0.005 | 0.0077 | 0.039 | 0.027 | 0.009 | - | - | - | 0.011 | 0.0041 | 0.0015 | - | 764 | 624 |
| N | 0.31 | 0.19 | 1.23 | 0.87 | 0.002 | 0.0051 | 0.028 | 0.009 | - | 0.012 | - | - | 0.009 | 0.0038 | 0.0021 | W:0.15 | 786 | 667 |
| O | 0.34 | 0.22 | 1.15 | 0.26 | 0.004 | 0.0029 | 0.031 | 0.024 | - | - | 0.14 | - | 0.018 | 0.0048 | 0.0023 | - | 796 | 713 |
| P | 0.33 | 0.67 | 1.32 | 0.25 | 0.011 | 0.0087 | 0.026 | 0.011 | 0.045 | 0.091 | 0.42 | 0.0009 | - | 0.0038 | 0.0018 | - | 816 | 565 |
| Q | 0.31 | 0.26 | 1.33 | 0.22 | 0.009 | 0.0042 | 0.008 | 0.075 | 0.012 | 0.054 | - | - | 0.015 | 0,0015 | 0.0013 | Cu:0.12,Ni:0.08,Sn:0.018 | 814 | 690 |
| R | 0.28 | 0.35 | 1.28 | 0.56 | 0.013 | 0.0051 | 0.015 | - | 0.038 | - | - | - | 0.008 | 0.0038 | 0.0022 | - | 795 | 670 |
| S | 0.30 | 0.15 | 1.11 | 0.33 | 0.008 | 0.0029 | 0.026 | 0.072 | - | 0.072 | - | - | - | 0.0035 | 0.0018 | Ca:0.013 | 796 | 722 |
| T | 0.30 | 0.23 | 2.21 | 0.18 | 0.007 | 0.0023 | 0.029 | - | - | - | - | 0.0011 | 0.011 | 0.0038 | 0.0023 | - | 767 | 568 |
| U | 0.30 | 0.25 | 1.88 | 0.20 | 0.003 | 0.0018 | 0.026 | 0.042 | 0.012 | - | - | - | 0.009 | 0.0042 | 0.0022 | Cu:0.12,Ni:0.08 | 791 | 660 |
| V | 0.31 | 0.14 | 1.57 | 0.21 | 0.004 | 0.0025 | 0.033 | 0.008 | 0.009 | - | - | - | 0.018 | 0.0036 | 0.0031 | Cu:0.12,Ni:0.06 | 782 | 679 |
| W | 0.35 | 0.13 | 1.15 | 0.75 | 0.007 | 0.0037 | 0.017 | 0.089 | 0.015 | - | - | 0.0009 | 0.015 | 0.0041 | 0.0017 | Cu:0.15,Ni:0.07,Sn:0.008 | 813 | 562 |
| X | 0.35 | 0.35 | 1.74 | 0.23 | 0.003 | 0.0018 | 0.028 | 0.045 | 0.055 | 0.062 | - | 0.0014 | 0.009 | 0.0035 | 0.0014 | Cu:0.09,Ni:0.07,Sn:0.011 | 791 | 536 |
| Y | 0.30 | 0.23 | 1.15 | 0.68 | 0.003 0.0034 | | 0.037 | 0.020 | 0.005 | 0.035 | - | 0.0008 | 0.010 | 0.0051 | 0.0021 | Cu:0.09,Ni:0.04,Sn:0.091 | 809 | 600 |

| | | | | | | | | | | | | | | | | | | |
|---|---|---|---|---|---|---|---|---|---|---|---|---|---|---|---|---|---|---|
| * Cells underlined in this Table do not satisfy the conditions according to the present invention. | | | | | | | | | | | | | | | | | | |

**[Table 3]**

| Steel | Annealing temperature (°C) | Coating | Skin pass (%) | TS before heat treatment (MPa) | TS after cooling (MPa) | E1 (%) | Grain size of prior austenite (µm) | Grain size ratio of prior austenite (rolling direction/sheet thickness direction) (-) | Coatability | Delayed-fracture resistance | Toughness | Percentage ductile fracture (%) |
|---|---|---|---|---|---|---|---|---|---|---|---|---|
| A | 750 | None | 0.5 | 695 | 1524 | 11.6 | 5.7 | 1.34 | - | A | A | 100 |
| B | 770 | Al | 0.5 | 750 | 1684 | 10.9 | 5.9 | 1.38 | A | A | A | 100 |
| c | 780 | None | 1.0 | 782 | 1785 | 11.5 | 5.8 | 1.46 | - | A | A | 90 |
| D | 750 | None | 1.0 | 792 | 1781 | 12.3 | 5.7 | 1.51 | - | A | A | 90 |
| E | 750 | None | 1.0 | 812 | 1801 | 11.5 | 5.9 | 1.45 | - | A | A | 100 |
| F | 780 | None | 1.0 | 814 | 1795 | 11.5 | 5.5 | 1.48 | - | A | A | 90 |
| G | 780 | None | 1.0 | 811 | 1795 | 11.2 | 5.3 | 1.52 | - | A | A | 95 |
| H | 800 | None | 1.0 | 795 | 1792 | 11.4 | 5.7 | 1.38 | - | A | A | 85 |
| I | 780 | Al | 0.7 | 812 | 1821 | 11.3 | 4.5 | 1.34 | A | A | A | 100 |
| J | 790 | Zn(GA) | 1.2 | 832 | 1922 | 10.7 | 5.8 | 1.32 | A | A | A | 90 |
| K | 780 | Zn(GI) | 1.5 | 887 | 2014 | 10.2 | 4.8 | 1.38 | A | A | A | 80 |
| L | 780 | Al | 1.5 | 742 | 1458 | 14.1 | 5.8 | 1.37 | A | A | A | 100 |
| M | 750 | None | 0.8 | 912 | 2470 | 7.8 | 5.2 | 1.41 | - | B | B | 20 |
| N | 780 | Al | 1.2 | 825 | 1878 | 10.9 | 10.1 | 1.02 | A | A | B | 30 |
| O | 790 | None | 2.1 | 869 | 1995 | 10.3 | 11.8 | 1.11 | - | A | B | 30 |
| P | 780 | Zn(GI) | 1.5 | 857 | 1972 | 10.4 | 8.4 | 1.34 | B | B | A | 70 |
| Q | 800 | Zn(GA) | 1.1 | 822 | 1946 | 10.5 | 9.4 | 1.37 | A | B | A | 60 |
| R | 780 | Zn(GI) | 0.8 | 788 | 1805 | 11.4 | 8.9 | 1.19 | A | A | B | 40 |
| S | 780 | Al | 1.2 | 8.15 | 1835 | 11.2 | 9.7 | 1.02 | A | A | B | 35 |
| T | 750 | None | 1.2 | 820 | 1826 | 11.2 | 15.4 | 0.98 | A | B | B | 20 |
| U | 780 | Al | 1.0 | 802 | 1833 | 11.2 | 5.7 | 1.31 | A | A | A | 75 |
| V | 770 | None | 0.7 | 810 | 1857 | 11.1 | 5.7 | 1.39 | A | A | A | 80 |
| W | 800 | Zn(GI) | 1.5 | 894 | 2101 | 9.8 | 5.2 | 1.31 | A | A | A | 80 |
| X | 780 | Al | 0.8 | 905 | 2191 | 9.4 | 5.2 | 1.34 | A | A | A | 75 |
| Y | 790 | Al | 1.2 | 797 | 1895 | 10.8 | 5.7 | 1.33 | A | A | A | 85 |

| | | | | | | | | | | | | |
|---|---|---|---|---|---|---|---|---|---|---|---|---|
| * Cells underlined in this Table do not satisfy the conditions according to the present invention. | | | | | | | | | | | | |

### [Example 2]

For Steels I, U, and Y in Table 2, 2 mm-thick hot-rolled steel sheets were obtained under predetermined hot rolling conditions (heating temperature: 1250°C, finishing temperature: 880°C, total reduction applied from the third last stand to the last stand: 60%, time from the end of finish rolling to the beginning of cooling: 0.8 seconds, coiling temperature: 550°C), and then pickled. A heating and cooling treatment was performed in which the hot-rolled steel sheets were heated to 880°C in a heating furnace as they were, the temperature was maintained for 120 seconds, then, the steel sheets were inserted between dies having a water supply inlet through which water was supplied from the surface and a water drain outlet through which the water was discharged, and was cooled to room temperature through spraying of water. Furthermore, the same heating and cooling treatment was performed on the hot-rolled steel sheets on which galvanizing (GI), galvannealing (GA), or aluminizing including Al and 10% of Si had been performed after the pickling. Meanwhile, 3.2 mm-thick hot-rolled steel sheets were obtained under predetermined hot rolling conditions (heating temperature: 1250°C, finishing temperature: 890°C, total reduction applied from the third last stand to the last stand: 70%, time from the end of finish rolling to the beginning of cooling: 0.5 seconds, coiling temperature: 500°C), pickled in the same manner, and cold-rolled at a reduction of 50%, thereby producing 1.6 mm-thick cold-rolled steel sheets. The cold-rolled steel sheets were put into a heating furnace heated to 900°C in the laboratory, the temperature was maintained for 60 seconds, and the steel sheets were cooled in the same manner as in Example 1. Meanwhile, as a result of observing the microstructure of a cross section using an optical microscope, the steel sheet subjected to the thermal history included 98% or more of martensite in terms of area percentage. For the obtained steel sheets, the same material properties as in Example 1 were evaluated, and the obtained results are shown in Table 4. All stell sheets had sufficient delayed-fracture resistance and low-temperature toughness.

**[Table 4]**

| Steel | Cold rolling | Coating | Skin pass (%) | TS before heat treatment (MPa) | TS after coolig (MPa) | E1 (%) | Grain size of prior austenite (µm) | Grain size ratio of prior austenite (rolling direction/sheet thickness direction) (-) | Delayed-fracture resistance | Toughness |
|---|---|---|---|---|---|---|---|---|---|---|
| I | No | None | 1.0 | 795 | 1845 | 11.1 | 5.8 | 1.42 | A | A |
| | No | GI | 1.2 | 808 | 1851 | 11.1 | 5.4 | 1.46 | A | A |
| | No | GA | 1.5 | 818 | 1848 | 11.1 | 5.3 | 1.42 | A | A |
| | No | Al | 0.8 | 821 | 1838 | 11.2 | 5.4 | 1.44 | A | A |
| | Yes | None | 1.0 | 812 | 1847 | 13.1 | 5.6 | 1.42 | A | A |
| | Yes | GI | 1.2 | 822 | 1852 | 12.5 | 5.3 | 1.45 | A | A |
| | Yes | GA | 1.5 | 830 | 1851 | 12.4 | 5.2 | 1.43 | A | A |
| | Yes | Al | 0.8 | 835 | 1842 | 12.8 | 5.7 | 1.41 | A | A |
| U | No | None | 1.0 | 812 | 1849 | 11.1 | 5.8 | 1.32 | A | A |
| | No | GI | 1.2 | 821 | 1852 | 11.1 | 5.5 | 1.33 | A | A |
| | No | GA | 1.5 | 829 | 1855 | 11.1 | 5.4 | 1.34 | A | A |
| | No | Al | 0.8 | 835 | 1841 | 11.2 | 5.8 | 1.32 | A | A |
| | Yes | None | 1.0 | 828 | 1844 | 12.8 | 5.2 | 1.31 | A | A |
| | Yes | GI | 1.2 | 834 | 1848 | 12.5 | 5.6 | 1.32 | A | A |
| | Yes | GA | 1.5 | 839 | 1854 | 12.4 | 5.7 | 1.33 | A | A |
| | Yes | Al | 0.8 | 842 | 1852 | 12.9 | 5.6 | 1.32 | A | A |
| Y | No | None | 1.0 | 829 | 1849 | 11.8 | 5.6 | 1.37 | A | A |
| | No | GI | 1.2 | 835 | 1857 | 11.5 | 5.7 | 1.39 | A | A |
| | No | GA | 1.5 | 842 | 1848 | 11.2 | 5.4 | 1.38 | A | A |
| | No | Al | 0.8 | 851 | 1849 | 11.2 | 5.6 | 1.37 | A | A |
| | Yes | None | 1.0 | 836 | 1852 | 13.5 | 5.7 | 1.38 A | | A |
| | Yes | GI | 1.2 | 842 | 1849 | 13.7 | 5.6 | 1.39 | A | A |
| | Yes | GA | 1.5 | 848 | 1856 | 13.6 | 5.7 | 1.37 | A | A |
| | Yes | Al | 0.8 | 852 | 1856 | 13.7 | 5.8 | 1.38 | A | A |

### [Example 3]

Steel I in Table 2 was subjected to hot rolling under the hot rolling conditions shown in Table 5 and, subsequently, cold rolling at a reduction of 50%. The steel sheet was heated to 850°C at the heating rate shown in Table 5, then, inserted between dies having a water supply inlet through which water was supplied from the surface and a water drain outlet through which the water was discharged, and was cooled to room temperature through spraying of water. Meanwhile, as a result of observing the microstructure of a cross section using an optical microscope, the steel sheet subjected to the thermal history included 98% or more of martensite in terms of area percentage. For the obtained steel sheets, the same material properties as in Example 1 were evaluated, and the obtained results are shown in Table 5. For toughness, Charpy tests were performed at -120°C, and steel sheets (after being subjected to the thermal history) for which an absorbed energy of 85 J/cm² or more was obtained in a case in which evaluation was made on a converted thickness of 10 mm were determined to be 'pass (A)'. In addition, cracking of the edge portions of the cold-rolled steel sheet after the cold rolling was checked, and a case in which cracking was not confirmed was evaluated to be "A," and a case in which cracking was confirmed was evaluated to be "B." For Nos. 1 to 5 according to the present invention, a tensile strength TS of a 1770 MPa level, sufficient delayed-fracture resistance and toughness could be obtained. Meanwhile, for No. 6 in which the heating temperature was higher than 1250°C, No. 7 in which the total reduction from the third last stand to the last stand was less than 60%, and No. 10 in which the heating rate was lower than 3 °C/s when hot stamping was performed, since the dimensional ratio of the lengths of prior austenite grains in a rolling direction to the lengths of prior austenite grains in the sheet thickness direction after hot stamping of the thermal history was smaller than 1.3, toughness was poor. Meanwhile, for No. 8 in which the finishing temperature was lower than 800°C (a temperature near the Ar3 point) in the hot rolling, since the dimensional ratio of the lengths of prior austenite grains in the rolling direction to the lengths of prior austenite in the sheet thickness direction exceeded 2.5, toughness was not sufficient. In addition, for No. 9 in which the coiling temperature (cooling-end temperature) was 400°C, and a reheating treatment was not performed, since the strength of the hot-rolled steel sheet was too high, cold rolling properties were poor. However, the No. 9 cold-rolled steel sheet had sufficient delayed-fracture resistance and toughness. Further, separately from the examples, even in a case in which the prior austenite grain size exceeded 6 µm, which was, for example, 15 µm, in a hot-rolled steel sheet, there was a case in which the prior austenite grain size became 6 µm or less in a hot-stamped steel sheet (steel). However, in this case, it was difficult to secure a dimensional ratio of the length of prior austenite in the rolling direction to the length of prior austenite in the sheet thickness direction of 1.3 or more through austenite transformation (re-austenite transformation) during heating in hot stamping, and it was not possible to satisfy the value of toughness in a hot-stamped steel.

**[Table 5]**

| No. | Heating temperature (°C) | Total reduction (%)^{D} | Finishing temperature (°C) | Cooling-start time (s) | Coiling temperature (°C) | Heating rate during hot stamping (°C/s ) | TS before heat treatment (MPa) | TS after cooling (MPa) ) | E1 (%) | Grain size of prior austenite (µm) | Grain size ratio of prior austenite (rolling direction/sheet thickness direction) (-) | Cold rolling properties²⁾ properties | Delayed-fracture resistance | Toughness |
|---|---|---|---|---|---|---|---|---|---|---|---|---|---|---|
| 1 | 1200 | 60 | 880 | 0.5 | 600 | 5 | 752 | 1775 | 12.6 | 5.7 | 1.34 | A | A | A |
| 2 | 1250 | 65 | 900 | 0.8 | 500 | 10 | 785 | 1791 | 12.7 | 5.8 | 1.41 | A | A | A |
| 3 | 1250 | 70 | 850 | 1.0 | 550 | 10 | 771 | 1786 | 11.9 | 5.8 | 1.44 | A | A | A |
| 4 | 1250 | 70 | 870 | 0.1 | 580 | 50 | 783 | 1825 | 12.8 | 5.7 | 1.53 | A | A | A |
| 5 | 1270 | 60 | 900 | 0.5 | 550 | 100 | 791 | 1808 | 11.2 | 5.5 | 1.63 | A | A | A |
| 6 | 1300 | 60 | 900 | 0.1 | 600 | 10 | 789 | 1792 | 12.8 | 7.2 | 1.09 | A | A | B |
| 7 | 1200 | 50 | 880 | 0.5 | 650 | 50 | 775 | 1780 | 12.1 | 6.8 | 1.23 | A | A | B |
| 8 | 1230 | 60 | 570 | 0.5 | 600 | 10 | 784 | 1795 | 9.8 | 5.8 | 3,11 | A | A | B |
| 9 | 1250 | 70 | 900 | 0.3 | 400 | 5 | 923 | 1785 | 10.9 | 5.5 | 1.37 | B | A | A |
| 10 | 1250 | 60 | 890 | 0.5 | 580 | 1 | 781 | 1787 | 12,2 | 5,8 | 0.98 | A | A | B |

| | | | | | | | | | | | | | | |
|---|---|---|---|---|---|---|---|---|---|---|---|---|---|---|
| 1) Total reduction from the third last stand to the last stand 2) Cracking of edge portions after cold rolling * Cells underlined in this Table do not satisfy the conditions according to the present invention. | | | | | | | | | | | | | | |

### Industrial Applicability

According to the present invention, it is possible to provide a hot-stamped steel having a strength of 1470 MPa or more and ductility in a part, to produce an ultrahigh-strength steel sheet for hot stamping which is excellent in terms of the balance of strength and toughness after hot stamping, and to producing a hot-stamped steel having the above characteristics by controlling heating conditions and subsequent cooling conditions when hot stamping is performed.

## Claims

1. A hot-stamped steel comprising, by mass%:
C: 0.20% to 0.35%;
Si: 0.1% to 0.5%;
a total of at least one selected from Mn and Cr: 1% to 3%;
Al: 0.005% to 0.06%;
Ti: 0.002% to 0.1%;
Nb: 0.002% to 0.1%;
O: 0.003% to 0.007%; optionally further comprising, by mass%, one or more of:
B: 0.005% or less;
V: 0.1% or less;
Mo: 0.5% or less;
Ca: 0.03% or less;
Mg: 0.03% or less;
REM: 0.03% or less;
Cu: 0.5% or less;
Sn: 0.1% or less;
Ni: 0.5% or less; and
W: 1% or less; and
a balance of iron and inevitable impurities, wherein
an amount of P is limited to 0.015% or less,
an amount of S is limited to 0.01% or less,
an amount of N is limited to 0.004% or less,
a dimensional ratio of lengths of prior austenite grains in a rolling direction to the lengths of the prior austenite grains in a sheet thickness direction is 1.3 to 2.5,
an average grain size of the prior austenite grains is 6 µm or less,
a microstructure includes 98% or more of martensite, and a tensile strength is 1470 MPa or more.

2. The hot-stamped steel according to claim 1, further comprising, a coating layer formed by solidification of molten metal on a surface.

3. A method of producing a steel sheet for a hot-stamped steel, the method comprising:
a first process in which a slab is heated to a temperature range of 1270°C or lower;
a second process in which a finish rolling is performed in a temperature range of 800°C to 900°C so that a total reduction from a third last stand to a last stand becomes 60% or more;
a third process in which a cooling begins within 1 second from an end of the second process; and
a fourth process in which a coiling is performed in a temperature of 600°C or lower,
the slab comprising: by mass%,
C: 0.20% to 0.35%,
Si: 0.1% to 0.5%,
a total of at least one selected from Mn and Cr: 1% to 3%,
Al: 0.005% to 0.06%,
Ti: 0.002% to 0.1%,
Nb: 0.002% to 0.1%,
O: 0.003% to 0.007%, wherein the slab optionally further includes, by mass%, one or more of
B: 0.005% or less,
V: 0.1% or less,
Mo: 0.5% or less,
Ca: 0.03% or less,
Mg: 0.03% or less,
REM: 0.03% or less,
Cu: 0.5% or less,
Sn: 0.1% or less,
Ni: 0.5% or less, and
W: 1% or less; and
a balance of iron and inevitable impurities, wherein
P is limited to 0.015% or less,
S is limited to 0.01% or less, and
N is limited to 0.004% or less.

4. The method of producing a steel sheet for a hot-stamped steel according to claim 3, further comprising, after the fourth process,
a process in which a cold rolling is performed.

5. The method of producing a steel sheet for a hot-stamped steel according to claim 3 or 4, further comprising, after the fourth process,
a process in which a cold rolling and a continuous annealing is performed.

6. The method of producing a steel sheet for a hot-stamped steel according to claim 3 or 4, further comprising, after the fourth process,
a process in which a coating of molten metal is performed.

7. The method of producing a steel sheet for a hot-stamped steel according to claim 3 or 4, further comprising, after the fourth process,
a process in which a cold rolling is performed, and a coating of molten metal is performed.

8. The method of producing a steel sheet for a hot-stamped steel according to claim 3 or 4, further comprising, after the fourth process,
a process in which a cold rolling and a continuous annealing are performed, and a coating of molten metal is performed.

9. A method of producing a hot-stamped steel, the method comprising,
hot-stamping a steel sheet obtained using the method of producing a steel sheet for a hot-stamped steel according to claim 3 under a condition in which the steel sheet is heated to a temperature range of an Ac3 point to 900°C at a heating rate of 3 °C/s or more, and then the steel sheet is cooled at a cooling rate of 150 °C/s or more in a temperature range of 300°C to an Ar3 point.

10. A method of producing a hot-stamped steel, the method comprising,
hot-stamping a steel sheet obtained using the method of producing a steel sheet for a hot-stamped steel according to claim 4 under a condition in which the steel sheet is heated to a temperature range of an Ac3 point to 900°C at a heating rate of 3 °C/s or more, and then the steel sheet is cooled at a cooling rate of 150 °C/s or more in a temperature range of 300°C to an Ar3 point.

## Patentansprüche

1. Ein warmumgeformter Stahl, umfassend, in Massen-%:
C: 0,20% bis 0,35%;
Si: 0,1% bis 0,5%;
eine Gesamtheit von mindestens einem, ausgewählt aus Mn und Cr: 1% bis 3%;
Al: 0,005% bis 0,06%;
Ti: 0,002% bis 0,1%;
Nb: 0,002% bis 0,1%;
O: 0,003% bis 0,007%; gegebenenfalls weiter umfassend, in Massen-%, eines oder mehrere aus:
B: 0,005% oder weniger,
V: 0,1% oder weniger;
Mo: 0,5% oder weniger;
Ca: 0,03% oder weniger;
Mg: 0,03% oder weniger;
REM: 0,03% oder weniger;
Cu: 0,5% oder weniger;
Sn: 0,1% oder weniger;
Ni: 0,5% oder weniger; und
W: 1 % oder weniger und
einen Rest aus Eisen und unvermeidbaren Verunreinigungen, wobei
eine Menge an P auf 0,015% oder weniger begrenzt ist,
eine Menge an S auf 0,01% oder weniger begrenzt ist,
die Menge an N auf 0,004% oder weniger begrenzt ist,
ein Dimensionsverhältnis von Längen von ursprünglichen Austenitkörnern in einer Walzrichtung zu den Längen der ursprünglichen Austenitkörner in einer Blechdickenrichtung 1,3 bis 2,5 beträgt,
eine durchschnittliche Korngröße der ursprünglichen Austenitkörner 6 µm oder weniger beträgt,
eine Mikrostruktur 98% oder mehr an Martensit enthält und eine Zugfestigkeit 1470 MPa oder mehr beträgt.

2. Der warmumgeformte Stahl nach Anspruch 1, weiter umfassend eine Beschichtungsschicht, die durch Verfestigung von geschmolzenem Metall auf einer Oberfläche gebildet wird.

3. Ein Verfahren zur Herstellung eines Stahlblechs für einen warmumgeformten Stahl, wobei das Verfahren umfasst:
ein erstes Verfahren, bei dem eine Bramme auf einen Temperaturbereich von 1270 °C oder darunter erwärmt wird;
ein zweites Verfahren, bei dem ein Schlusswalzen in einem Temperaturbereich von 800 °C bis 900 °C durchgeführt wird, derart, dass eine Gesamtreduktion von einem drittletzten Stand zu einem letzten Stand 60% oder mehr beträgt;
ein drittes Verfahren, bei dem eine Abkühlung innerhalb 1 Sekunde ab Ende des zweiten Verfahrens beginnt; und
ein viertes Verfahren, bei dem ein Aufspulen bei einer Temperatur von 600 °C oder darunter durchgeführt wird,
wobei die Bramme in Massen-% umfasst:
C: 0,20% bis 0,35%,
Si: 0,1% bis 0,5%,
eine Gesamtheit von mindestens einem ausgewählt aus Mn und Cr: 1% bis 3%,
Al: 0,005% bis 0,06%,
Ti: 0,002% bis 0,1%,
Nb: 0,002% bis 0,1%,
O: 0,003% bis 0,007%, wobei die Bramme gegebenenfalls ferner, in Massen-%, enthält:
eines oder mehrere aus
B: 0,005% oder weniger,
V: 0,1% oder weniger,
Mo: 0,5% oder weniger
Ca: 0,03% oder weniger,
Mg: 0,03% oder weniger,
REM: 0,03% oder weniger,
Cu: 0,5% oder weniger,
Sn: 0,1% oder weniger,
Ni: 0,5% oder weniger, und
W: 1 % oder weniger und
einen Rest aus Eisen und unvermeidbaren Verunreinigungen, wobei P auf 0,015% oder weniger begrenzt ist,
S auf 0,01% oder weniger begrenzt ist, und
N auf 0,004% oder weniger begrenzt ist.

4. Das Verfahren zur Herstellung eines Stahlblechs für einen warmumgeformten Stahl nach Anspruch 3, ferner umfassend nach dem vierten Verfahren, ein Verfahren, bei dem ein Kaltwalzen durchgeführt wird.

5. Das Verfahren zur Herstellung eines Stahlblechs für einen warmumgeformten Stahl nach Anspruch 3 oder 4, ferner umfassend nach dem vierten Verfahren,
ein Verfahren, bei dem ein Kaltwalzen und ein kontinuierliches Glühen durchgeführt werden.

6. Das Verfahren zur Herstellung eines Stahlblechs für einen warmumgeformten Stahl nach Anspruch 3 oder 4, ferner umfassend nach dem vierten Verfahren,
ein Verfahren, bei dem eine Beschichtung mit geschmolzenem Metall durchgeführt wird.

7. Das Verfahren zur Herstellung eines Stahlblechs für einen warmumgeformten Stahl nach Anspruch 3 oder 4, ferner umfassend nach dem vierten Verfahren,
ein Verfahren, bei dem ein Kaltwalzen durchgeführt wird und eine Beschichtung mit geschmolzenem Metall durchgeführt wird.

8. Das Verfahren zur Herstellung eines Stahlblechs für einen warmumgeformten Stahl nach Anspruch 3 oder 4, ferner umfassend nach dem vierten Verfahren,
ein Verfahren, bei dem ein Kaltwalzen und ein kontinuierliches Glühen durchgeführt werden und eine Beschichtung mit geschmolzenem Metall durchgeführt wird.

9. Ein Verfahren zur Herstellung eines warmumgeformten Stahls, wobei das Verfahren umfasst:
Warmumformen eines Stahlblechs, erhalten mithilfe des Verfahrens zur Herstellung eines Stahlblechs für einen warmumgeformten Stahl nach Anspruch 3 unter einer Bedingung, bei der das Stahlblech auf einen Temperaturbereich von einem Ac3-Punkt bis 900°C mit einer Erwärmungsrate von 3 °C/s oder mehr erwärmt wird und dann das Stahlblech mit einer Abkühlrate von 150°C/s oder mehr auf einen Temperaturbereich von 300°C bis zu einem Ar3-Punkt abgekühlt wird.

10. Ein Verfahren zur Herstellung eines warmumgeformten Stahls, wobei das Verfahren umfasst:
Warmumformen eines Stahlblechs, erhalten mithilfe des Verfahrens zur Herstellung eines Stahlblechs für einen warmumgeformten Stahl nach Anspruch 4 unter einer Bedingung, bei der das Stahlblech auf einen Temperaturbereich von einem Ac3-Punkt bis 900°C mit einer Erwärmungsrate von 3 °C/s oder mehr erwärmt wird und dann das Stahlblech mit einer Abkühlrate von 150°C/s oder mehr auf einen Temperaturbereich von 300°C bis zu einem Ar3-Punkt abgekühlt wird.

## Revendications

1. Acier estampé à chaud comprenant, en % en masse :
C : 0,20 % à 0,35 % ;
Si : 0,1% à 0,5 % ;
le total d'au moins l'un choisi parmi Mn et Cr : 1 % à 3 % ;
Al : 0,005 % à 0,06 % ;
Ti : 0,002 % à 0,1 % ;
Nb : 0,002 % à 0,1 % ;
O : 0,003 % à 0,007 % ;
éventuellement comprenant en outre, en % en masse, un ou plusieurs parmi :
B : 0,005 % ou moins ;
V : 0,1 % ou moins ;
Mo : 0,5 % ou moins ;
Ca : 0,03 % ou moins ;
Mg : 0,03 % ou moins ;
REM (éléments des terres rares) : 0,03 % ou moins ;
Cu : 0,5 % ou moins ;
Sn : 0,1 % ou moins ;
Ni : 0,5 % ou moins ; et
W : 1 % ou moins ; et
le reste étant du fer et des impuretés inévitables, dans lequel
la quantité de P est limitée à 0,015 % ou moins,
la quantité de S est limitée à 0,01 % ou moins,
la quantité de N est limitée à 0,004 % ou moins,
le rapport dimensionnel des longueurs de grains d'austénite antérieure dans la direction de laminage aux longueurs des grains d'austénite antérieure dans la direction de l'épaisseur de la tôle est de 1,3 à 2,5,
la granulométrie moyenne des grains d'austénite antérieure est de 6 µm ou moins,
la microstructure contient 98 % ou plus de martensite, et la résistance à la traction est de 1 470 MPa ou plus.

2. Acier estampé à chaud selon la revendication 1, comprenant en outre une couche de revêtement formée par solidification d'un métal fondu sur une surface.

3. Procédé de production d'une tôle d'acier pour acier estampé à chaud, le procédé comprenant :
un premier traitement dans lequel une brame est chauffée dans la plage de température de 1 270°C ou moins ;
un deuxième traitement dans lequel un laminage de finition est effectué dans la plage de température allant de 800°C à 900°C de façon que la réduction totale de la troisième dernière cage à la dernière cage devienne de 60 % ou plus ;
un troisième traitement dans lequel un refroidissement commence dans la seconde suivant la fin du deuxième traitement ; et
un quatrième traitement dans lequel un bobinage est effectué à une température de 600°C ou moins,
la brame comprenant, en % en masse :
C : 0,20 % à 0,35 %,
Si : 0,1 % à 0,5 %,
le total d'au moins l'un choisi parmi Mn et Cr : 1 % à 3 %,
Al : 0,005 % à 0,06 %,
Ti : 0,002 % à 0,1 %,
Nb : 0,002 % à 0,1 %,
O : 0,003 % à 0,007 %,
laquelle brame comprend éventuellement en outre, en % en masse, un ou plusieurs parmi :
B : 0,005 % ou moins,
V : 0,1 % ou moins,
Mo : 0,5 % ou moins,
Ca : 0,03 % ou moins,
Mg : 0,03 % ou moins,
REM (éléments des terres rares) : 0,03 % ou moins,
Cu : 0,5 % ou moins,
Sn : 0,1 % ou moins,
Ni : 0,5 % ou moins, et
W : 1 % ou moins ; et
le reste étant du fer et des impuretés inévitables, dans lequel
P est limité à 0,015 % ou moins,
S est limité à 0,01 % ou moins,
N est limité à 0,004 % ou moins.

4. Procédé de production d'une tôle d'acier pour acier estampé à chaud selon la revendication 3, comprenant en outre, après le quatrième traitement, un traitement dans lequel un laminage à froid est effectué.

5. Procédé de production d'une tôle d'acier pour acier estampé à chaud selon la revendication 3 ou 4, comprenant en outre, après le quatrième traitement, un traitement dans lequel un laminage à froid et un recuit en continu sont effectués.

6. Procédé de production d'une tôle d'acier pour acier estampé à chaud selon la revendication 3 ou 4, comprenant en outre, après le quatrième traitement, un traitement dans lequel un revêtement de métal fondu est réalisé.

7. Procédé de production d'une tôle d'acier pour acier estampé à chaud selon la revendication 3 ou 4, comprenant en outre, après le quatrième traitement, un traitement dans lequel un laminage à froid est effectué, et un revêtement de métal fondu est réalisé.

8. Procédé de production d'une tôle d'acier pour acier estampé à chaud selon la revendication 3 ou 4, comprenant en outre, après le quatrième traitement, un traitement dans lequel un laminage à froid et un recuit en continu sont effectués, et un revêtement de métal fondu est réalisé.

9. Procédé de production d'un acier estampé à chaud, le procédé comprenant l'estampage à chaud d'une tôle d'acier obtenue par utilisation du procédé de production d'une tôle d'acier pour acier estampé à chaud selon la revendication 3, dans des conditions dans lesquelles la tôle d'acier est chauffée dans la plage de température allant du point Ac3 à 900°C à une vitesse de montée en température de 3°C/s ou plus, et ensuite la tôle d'acier est refroidie à une vitesse de refroidissement de 150°C/s ou plus dans la plage de température allant de 300°C au point Ar3.

10. Procédé de production d'un acier estampé à chaud, le procédé comprenant l'estampage à chaud d'une tôle d'acier obtenue par utilisation du procédé de production d'une tôle d'acier pour acier estampé à chaud selon la revendication 4, dans des conditions dans lesquelles la tôle d'acier est chauffée dans la plage de température allant du point Ac3 à 900°C à une vitesse de montée en température de 3°C/s ou plus, et ensuite la tôle d'acier est refroidie à une vitesse de refroidissement de 150°C/s ou plus dans la plage de température allant de 300°C au point Ar3.
